# EUROPÄISCHE PATENTANMELDUNG

(11) **EP 0 910 056 A1**
(43) Veröffentlichungstag der Anmeldung: **21.04.1999**
(21) Anmeldenummer: 98119446.7
(22) Anmeldetag: 15.10.1998
(51) Int. Cl.: G08C 17/02, G05D 23/19

(54) **Funkgesteuerter Heizungsregler**

(30) Priorität: 17.10.1997 DE 19745973
(71) Anmelder: THEBEN-WERK ZEITAUTOMATIK GMBH, D-72401 Haigerloch (DE)
(72) Erfinder: Renner, Hans, Dipl.-Ing., 72351 Geislingen (DE)
(74) Vertreter: Neymeyer, Franz, Dipl.-Ing. (FH)

(57) **Zusammenfassung**

Die Erfindung betrifft einen Heizungsregler mit einem Empfänger (1) für Funksignale, der über eine in einem bestimmten HF-Band liegende Funkstrecke mit einem Thermostaten in Verbindung steht, welcher einen batteriegespeisten Sender aufweist, durch welchen Funksignale an den Empfänger gesendet werden. Um in einem Raum die für die zu empfangenden Signale optimale räumliche Stelle ausfindig zu machen bzw. um zugleich prüfen zu können, ob in dem vorgesehenen Raum überhaupt eine ausreichende Empfangsqualität vorhanden ist, ist vorgesehen, daß der Empfänger (1) mit einer auf das HF-Band der Funkstrecke geeichten Kontrolleinheit ausgerüstet ist, welche die Stärke der ankommenden Funksignale des Senders und/oder in der Umgebung des Empfängers (1) vorhandenen Störfelder mißt und akustisch und/oder optisch anzeigt.

## Beschreibung

Die Erfindung betrifft einen Heizungsregler mit einem Empfänger für Funksignale, der über eine in einem bestimmten HF-Band liegende Funkstrecke mit einem Thermostaten in Verbindung steht, welcher einen batteriegespeisten Sender aufweist, durch welchen Funksignale an den Empfänger gesendet werden.

Aus der US-PS 4 433 719 ist bereits ein tragbarer Funkthermostat bekannt, der über eine Funkstrecke mit der Steuereinheit einer Heizungsanlage oder einer Kühlanlage in Verbindung steht. Über die Funkstrecke werden vom Thermostaten Hochfrequenzsignale in codierter Form übertragen, die in der Steuereinheit wieder decodiert werden. Der Thermostat wird von einer Batterie gespeist. Um eine möglichst lange Lebensdauer der Batterie zu erreichen, erfolgt die Übertragung der Sendesignale im Thermostaten zur Steuereinheit der Heizungs- oder Kühlanlage in weit auseinanderliegenden Zeitintervallen.

Diese Sendesignale enthalten jeweils den Schaltzustand eines temperaturabhängigen Schalters und ein für den jeweiligen Sender spezifisches Adressignal.

Angewendet wird dieser transportable Thermostat in der Weise, daß er in einem von der Steuereinheit der Heizungs- bzw. Kühlanlage entfernten Raum angeordnet wird, dessen Temperatur geregelt werden soll.

Aus EP 0 591 704 A2 ist ein Verfahren zur drahtlosen, hochfrequenten Übertragung von Messwertsignalen, insbesondere Temperatursignalen mittels eines batteriegespeisten Senders bekannt. Dabei wird das Sendesignal senderspezifisch codiert auf einen Empfänger übertragen, der an eine Steuereinrichtung einer Heizungssteuerung angeschlossen ist. Mit diesem Verfahren ist es möglich, ein dem Meßwert proportionales Signal zu übertragen. Dabei wird das Sendesignal als digitales Datentelegramm übertragen, das sowohl Adressdaten zur Adressierung eines Empfängers, wie auch digitale Adressdaten, die dem jeweiligen Sender zugeordnet sind, und Meßwertdaten in Form von Digits umfaßt, die den Meßwertsignalen entsprechen.

Da die batteriegespeisten Sender, die hier verwendet werden, gewöhnlich sehr kleine Sendeleistungen aufweisen, ist es nicht nur erforderlich, Empfänger mit hoher Empfangsqualität einzusetzen, sondern um eine optimale Anordnung des Empfängers in dem Raum, in dem sich die mit ihm verbundenen Steuereinheit befindet, an einer Stelle anzubringen, an welcher die optimalen Empfangsbedingungen herrschen und zwar sowohl bezüglich der Stärke des zu empfangenden Signals als auch bezüglich der Stärke eventuell vorhandener Störfelder.

Es ist deshalb Aufgabe der vorliegenden Erfindung, einen Funkthermostaten der gattungsgemäßen Art zu schaffen, mit dem es möglich ist, seine bezüglich der Empfangsqualität der vom Sender aus einem entfernten Raum eines Gebäudes gesendeten und zu empfangenden Signale optimale räumliche Stelle ausfindig zu machen bzw. um zugleich prüfen zu können, ob in dem vorgesehenen Raum überhaupt eine ausreichende Empfangsqualität vorhanden ist.

Gelöst wird diese Aufgabe erfindungsgemäß dadurch, daß der Empfänger mit einer auf das HF-Band der Funkstrecke geeichten Kontrolleinheit ausgerüstet ist, welche die Stärke der ankommenden Funksignale des Senders und/oder in der Umgebung des Empfängers vorhandenen Störfelder mißt und akustisch und/oder optisch anzeigt.

Da die Sendeleistung des Thermostatsenders in der Größenordnung von 10 mW liegt, ist die Reichweite dieses Senders generell stark abhängig von der Beschaffenheit des Gebäudes, in dem der Heizungsregler installiert wird. Viel Stahlbeton in Fußböden und/oder Wänden des Gebäudes verschlechtert die Übertragungsqualität. Normalerweise beträgt die Funkstrecke zwischen dem Thermostatsender und dem Heizungsregler 25 m bis 30 m in Gebäuden. Im freien Raum, also außerhalb von Gebäuden, können mit der gleichen Sendeleistung Reichweiten von ca. 100 m erreicht werden.

Aber nicht nur die übertragungshemmenden Eigenschaften des Gebäudes können die Übertragungsqualität bzw. Signalstärke vermindern, sondern auch Störfelder, die von Fernsehapparaten, HF-Spielzeugen od. dgl. ausgehen.

Mit der vorliegenden Erfindung ist der Installateur eines solchen Heizreglers in der Lage, bei der Installation des Heizungsreglers sowohl Störfelder zu erkennen als auch die Qualität des vom sendenden Raumthermostaten zu empfangenden Funksignals zu bestimmen und auch die räumliche Stelle aufzufinden, wo die Störfelder am geringsten bzw. der Empfang am besten ist.

Das Messen bzw. Ermitteln der Sende- bzw. Empfangsqualitätskriterien kann sowohl im unidirektionalen Sendebetrieb mit dem Empfänger des Heizungsreglers durchgeführt werden als auch im bidirektionalen Sendebetrieb.

Zweckmäßig sind die Ausgestaltungen der Erfindung nach den Ansprüchen 2 und 3, weil dadurch eine zusätzliche Möglichkeit gegeben ist, die Empfangsqualität zu optimieren.

Weitere vorteilhafte Ausgestaltungen der Erfindung sind Gegenstand der Ansprüche 4 bis 8, wobei die Anzeige der jeweils gemessenen Werte auf unterschiedliche Weise bzw. mit unterschiedlichen Anzeigemitteln durchgeführt werden kann.

Wichtig dabei ist auch, daß die Anzeige in der Lage ist, sowohl Feldstärken von Störfrequenzen als auch die Sende- bzw. Empfangsgüte der vom Sendethermostaten ausgesendeten und vom Heizungsregler zu empfangenden Funksignale im festgelegten Frequenzbereich anzuzeigen.

Dazu ist es erforderlich, entsprechende elektronische Aufbereitungseinheiten vorzusehen, welche die jeweils erfaßten Meßdaten zur Anzeige bringen können.

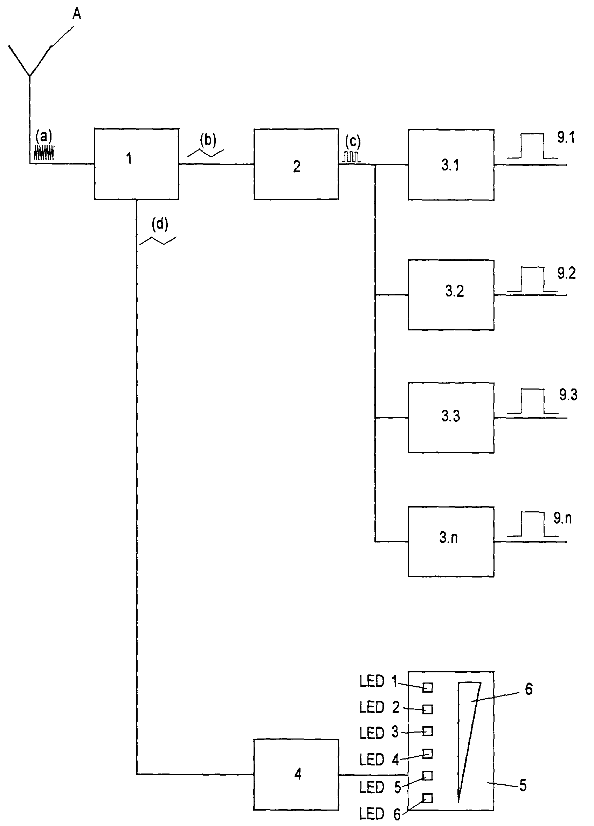

Anhand der Zeichnung wird im folgenden die Erfindung näher erläutert.

Der erfindungsgemäße Heizungsregler verfügt über einen Empfänger 1, der mit einer auf das HF-Band der Funkstrecke geeichten Kontrolleinheit ausgerüstet ist, welche die Stärke der ankommenden Funksignale des Senders und/oder in der Umgebung des Empfängers vorhandene Störfelder mißt und akustisch und/oder optisch anzeigt.

Der Empfänger ist beispielsweise als 433MHz Fernwirk-Empfänger mit Ein-Kanal- oder Mehr-Kanal-Befehlsauswertung ausgelegt, so daß eine Ein-Zonen- oder Mehr-Zonen-Steuerung erfolgen kann. Für das Einlernen der Thermostat-Codierung, das Löschen und die manuelle Heizungsein- bzw. Ausschaltung sind Bedientasten mit LEG-Anzeigen vorgesehen.

Als Antenne A ist eine Wurfantenne vorgesehen, die in ihrer optimalen Empfangslage fixiert werden kann. Statt dessen kann aber auch eine abgestimmte UHF 433MHz-Antenne eingesetzt werden, in der die Empfangsempfindlichkeit und somit auch die Empfangsqualität optimiert werden kann.

Im Empfänger 1 wird das HF-Signal (a) schmalbandig ausgefiltert und in die niederfrequenten Signale (b) sowie in Regelsteuersignale (d) umgewandelt. Zu diesem Zweck ist der Empfänger mit einem auf das HF-Signalband abgestimmten HF-Filter sowie mit einem NF-Filter und einem Wandler versehen, durch welchen die im HF-Signalband enthaltenen analogen NF-Signale umgewandelt und über eine digitale Aufbereitungseinheit 2 mehrere Steuersignal-Decoderstufen 3.1, 3.2, 3.3 und 3.n zugeführt werden, während zugleich die abgeleiteten Kontrollsignale (d) einer Meßeinheit 4 zugeführt werden, welche in der Lage ist, eine Feldstärkemessung bzw. Signalstärkemessung durchzuführen und in der Anzeigeeinrichtung 5 zur Anzeige zu bringen.

Die Anzeigeeinrichtung 5 kann beispielsweise mit fünf übereinander oder nebeneinander angeordneten LED-Einheiten LED 1 bis LED 5 und/oder mit einer LCD-Panel-Anzeige 6 ausgerüstet sein, mit der die jeweils gemessenen Werte zur Anzeige gebracht werden. Es versteht sich, daß auch andere optische Anzeigen verwendet werden können. Auch akustische Melder können zur Anwendung kommen.

In der Aufbereitungseinheit 2 werden aus der analogen NF-Spannung die darin enthaltenen digitalen Steuersignale (c) generiert, die den einzelnen Befehls-Decoderstufen 3.1 bis 3.n zugeführt werden. In diesen Befehls-Decoderstufen 3.1 bis 3.n werden die eingehenden Steuersignale ausgewertet und hieraus die Schaltimpulse 9.1 bis 9.n erzeugt, die den jeweils angeschlossenen Brennerkanälen zugeleitet werden um die gewünschten Schaltvorgänge zu bewirken.

Wie bereits erwähnt, wird in der Meßeinheit 4 das Regelsignal (d) des Empfängers zur Darstellung der Signalqualität in der Anzeigeeinheit 5 aufbereitet.

Grundsätzlich kann der Sender des Thermostats außer den Kontrollsignalen auch Steuersignale beliebiger Art senden. Aus Energieersparnisgründen ist es jedoch zweckmäßig, den Sender außer den Kontrollsignalen nur die Ein- und Ausschaltsignale senden zu lassen.

Bei der Störfeldbestimmung werden über die Antenne A die im definierten Frequenzband liegenden bzw. dazu eng benachbarten Störfelder laufend erfaßt und der Decoderschaltung zugeleitet. Dort wird das eingehende Signal auf den eingelernten Code getestet und über eine Auswerteelektronik wird die Feldstärke des bzw. der erfaßten Störfelder zur Anzeige gebracht.

Will man den Einfluß dieser Störfelder auf den Empfänger minimieren oder beseitigen, so kann dies entweder durch entsprechende Veränderungen an der Antenne oder durch Lageveränderung des Empfängers erfolgen, wobei auch hierzu die Anzeige benutzt werden kann.

Die Optimierung der Empfangsgüte der vom Thermostatsender über die Funkstrecke gelieferten Signale kann mit demselben System durchgeführt werden. Dabei löst der Codetester bei erkanntem Code einen entsprechenden Schaltbefehl aus, der wiederum zur Anzeige gebracht werden kann. An der Anzeige kann dann der Installateur erkennen, ob die Empfangsqualität ausreichend gut bzw. noch optimierbar ist.

Auch hierfür stehen Veränderungen an der Antenne bzw. örtliche Veränderungen des Empfängers als Optimierungsmöglichkeiten zur Verfügung.

Das erfindungsgemäße System kann für alle zugelassenen Frequenzbänder und die jeweils festgelegten Kanäle eingesetzt werden.

## Patentansprüche

1. Heizungsregler mit einem Empfänger für Funksignale, der über eine in einem bestimmten HF-Band liegende Funkstrecke mit einem Thermostaten in Verbindung steht, welcher einen batteriegespeisten Sender aufweist, durch welchen Funksignale an den Empfänger gesendet werden,
**dadurch gekennzeichnet**,
daß der Empfänger (1) mit einer auf das HF-Band der Funkstrecke geeichten Kontrolleinheit ausgerüstet ist, welche die Stärke der ankommenden Funksignale des Senders und/oder in der Umgebung des Empfängers (1) vorhandenen Störfelder mißt und akustisch und/oder optisch anzeigt.

2. Heizungsregler nach Anspruch 1, dadurch gekennzeichnet, daß der Empfänger (1) an eine räumlich verstellbare Antenne (A) angeschlossen ist.

3. Heizungsregler nach Anspruch 1, dadurch gekennzeichnet, daß der Empfänger (1) mit einer auf das zu übertragende Frequenzband abgestimmten UHF-Antenne versehen ist.

4. Heizungsregler nach einem der Ansprüche 1 bis 3, dadurch gekennzeichnet, daß der Empfänger (1) mit einem auf das HF-Signalband abgestimmten HF-Filter sowie mit einem NF- Filter und einem Wandler versehen ist, durch welchen die im HF-Signalband enthaltenen analogen NF- Signale umgewandelt und über eine digitale Aufbereitungseinheit (2) wenigstens zwei Steuersignal-Decoderstufen (3.1 bis 3n) zugeführt werden, während zugleich abgeleitete Kontrollsignale (d) einer Meßeinheit (4), insbesondere für die Feldstärkemessung, zugeführt werden.

5. Heizungsregler nach einem der Ansprüche 1 bis 4, dadurch gekennzeichnet, daß an die digitale Aufbereitungseinheit (2) mehrere Decoderstufen (3.1 bis 3n) angeschlossen sind, die jeweils unterschiedliche Schaltsignale (9.1 bis 9n) für nachgeschaltete Steuergeräte erzeugen.

6. Heizungsregler nach einem der Ansprüche 1 bis 5, dadurch gekennzeichnet, daß in der Meßeinheit (4) die vom Empfänger ankommenden Kontrollsignale (d) zur Darstellung der Signalqualität mittels einer LED- oder einer LCD- Panel-Anzeige (5) od. dgl. aufbereitet werden.

7. Heizungsregler nach einem der Ansprüche 1 bis 6, dadurch gekennzeichnet, daß der Thermostat außer den Kontrollsignalen Steuersignale an den Empfänger (1) sendet.

8. Heizungsregler nach einem der Ansprüche 1 bis 6, dadurch gekennzeichnet, daß der Thermostat außer den Kontrollsignalen nur Ein- und Ausschaltsignale an den Empfänger (1) sendet.
